# FASCICULE DE BREVET EUROPEEN

(11) **EP 3 351 990 B1**
(45) Date de publication et mention de la délivrance du brevet: **25.03.2020**
(21) Numéro de dépôt: 17207778.6
(22) Date de dépôt: 15.12.2017
(51) Int. Cl.: G02B 19/00, F21S 8/00

(54) **DISPOSITIF DE PROJECTION D'UN FAISCEAU LUMINEUX PIXELISÉ, PROJECTEUR MUNI D'UN TEL DISPOSITIF**
VORRICHTUNG ZUR PROJEKTION EINES VERPIXELTEN LICHTSTRAHLS, UND MIT EINER SOLCHEN VORRICHTUNG AUSGESTATTETER SCHEINWERFER
DEVICE FOR PROJECTING A PIXELATED LIGHT BEAM, PROJECTOR PROVIDED WITH SUCH A DEVICE

(30) Priorité: 19.01.2017 FR 1750412
(43) Date de publication de la demande: 25.07.2018
(73) Titulaire: Valeo Vision, 93012 Bobigny Cedex (FR)
(72) Inventeur: DE LAMBERTERIE, Antoine, 93012 BOBIGNY Cedex (FR); THIN, Guillaume, 93012 BOBIGNY Cedex (FR); LESAFFRE, Olivier-Sébastien, 93012 BOBIGNY Cedex (FR)
(74) Mandataire: Valeo Vision

(56) Documents cités:
- EP-A1- 2 357 399
- DE-A1-102014 210 500
- US-A1- 2015 241 009

## Description

### DOMAINE DE L'INVENTION

La présente invention concerne un dispositif de projection de faisceau lumineux, notamment pour véhicule automobile, et un projecteur de faisceau lumineux, de type feu de croisement ou feu de route, muni d'un tel dispositif de projection.

### ARRIERE-PLAN

Les projecteurs de véhicule automobile sont munis d'un ou de plusieurs modules optiques agencés dans un boîtier fermé par une glace de manière à obtenir un ou plusieurs faisceaux lumineux à la sortie du projecteur. De façon simplifiée, un module optique du boîtier comprend notamment une source de lumière, par exemple une (ou plusieurs) diode(s) électroluminescente(s) (DEL, ou LED acronyme de l'anglais Light Emitting Diode), qui émet des rayons lumineux, et un système optique comportant une ou plusieurs lentilles et, le cas échéant un réflecteur, pour orienter les rayons lumineux issus de la source lumineuse afin de former le faisceau lumineux de sortie du module optique.

On sait que certains projecteurs de véhicule automobile sont capables de faire varier l'orientation du faisceau lumineux en fonction des besoins du conducteur du véhicule. Ainsi, lorsque le véhicule effectue un virage, un système électronique à bord du véhicule commande une modification de l'orientation du faisceau lumineux afin de l'adapter au champ de vision du conducteur pendant la manœuvre. Le projecteur déplace alors l'axe du faisceau lumineux dans le sens de rotation du véhicule afin d'éclairer la route plutôt que de projeter le faisceau tout droit.

D'autres projecteurs connus peuvent remplir les fonctions de feux de croisement et de feux de route, avec la même source de lumière. A cette fin, les projecteurs utilisent des moyens mécaniques qui déplacent un élément, appelée plieuse, pour couper une partie du faisceau. En outre, il existe aussi un éclairage de type feu de croisement conçu pour autoroute, dont le faisceau passe légèrement au-dessus de la coupure du faisceau du feu de croisement usuel afin d'améliorer la visibilité de la route lorsque le véhicule se déplace sur autoroute.

Ainsi, on souhaite pouvoir contrôler les rayons lumineux émis par la source pour modifier les dimensions du faisceau lumineux qui sort du projecteur et parvenir à effectuer toutes les fonctions mentionnées précédemment.

Cependant, dans les systèmes d'éclairage actuels, une résolution accrue du faisceau est demandée, les besoins en nombre de pixels étant donc importants. Ainsi, le nombre de sources lumineuses, qui peut aller de 1000 à 500000, voire plus, doit être élevé pour répondre à cette nécessité.

Or les matrices de diodes comportant un tel nombre de sources ont plusieurs désavantages. Le premier désavantage tient au coût de fabrication de tels ensembles, car une grande surface de puce a beaucoup plus de chance d'être créée sur un élément de wafer présentant un défaut. Ceci entraîne un rendement industriel faible et par conséquent un coût élevé. Un deuxième désavantage vient de la fragilité d'une telle matrice qui requiert un soin particulier lors de sa manipulation afin d'éviter tout endommagement.

Afin d'éviter ce problème, une matrice de diode répondant aux besoins susmentionnés peut être simulée en combinant et en assemblant plusieurs matrices de diodes : les matrices de diodes sont aboutées.

Cependant, des matrices de diodes aboutées ne permettent pas d'obtenir un faisceau lumineux homogène car il apparaît également un intervalle entre les différents faisceaux lumineux des matrices composant le faisceau, intervalle qui correspond à l'espacement entre les matrices.

L'invention vise donc à obtenir un dispositif optique, notamment pour véhicule automobile, qui permette de projeter un faisceau lumineux homogène de matrices aboutées de sources lumineuses pixélisées.

### RESUME DE L'INVENTION

Pour cela, l'invention concerne un dispositif optique de projection de faisceau lumineux pixélisé, notamment pour véhicule automobile, qui comprend au moins deux matrices munies chacune de sources primaires de lumière aptes à émettre des rayons lumineux et les dites au moins deux matrices sont disposées chacune sur un plan qui lui est propre. Le dispositif comprend au moins un système optique primaire associé à chaque matrice et disposé en aval de la matrice. Chaque système optique primaire forme une image virtuelle de la matrice en amont de cette dernière. Le dispositif comprend en outre un système de projection optique qui est apte à former une image à partir des images virtuelles formées en amont et dans laquelle les images virtuelles imagées par le système de projection optique se recouvrent partiellement dans l'image formée par le système de projection optique. Le système optique de projection est donc apte à former une image de chaque image virtuelle, les images des images virtuelles ainsi formées se recouvrant partiellement.

Ainsi, l'invention permet d'utiliser et d'associer des matrices afin de créer un faisceau lumineux qui est semblable à celui qu'une matrice de sources de lumière de grande dimension créerait. On évite ainsi d'avoir à fabriquer de telles matrices d'un seul tenant, ce qui permet de baisser les coûts de production, ainsi que de réduire les pertes en cas de dommages. De plus, on peut facilement choisir la taille de l'ensemble des matrices, sans devoir les juxtaposer et sans devoir fabriquer une grande matrice de taille adaptée à chaque fois.

En outre, les images virtuelles étant formées en amont des matrices de sources lumineuses, elles peuvent être agrandies, ce qui permet de minimiser l'espace entre les pixels lumineux produits par les sources des différentes matrices.

De plus, le système de projection optique forme en sortie une image à partir des images virtuelles formées en amont des matrices, dans laquelle des images des images virtuelles se recouvrent partiellement, réalisant ainsi une bonne homogénéité de la distribution de lumière entre les matrices.

Par ailleurs, les matrices qui comportent les sources primaires sont placées sur des plans différents, ce qui permet d'optimiser le rendement du système optique même pour les sources lumineuses primaires qui sont situées le coté du dispositif optique. Chaque système optique d'une matrice concerne un champ plus petit que si un système optique global était associé à l'ensemble des matrices. Ainsi, le dispositif optique selon l'invention produit moins d'aberrations et la transmission de la lumière produite par les matrices est améliorée.

De plus, le dispositif selon l'invention offre une grande facilité de mise en œuvre et de configuration car chaque matrice/système optique peut être corrigé, géré, conçu individuellement, contrairement à un unique système optique.

On peut également mentionner que le dispositif selon l'invention permet d'utiliser des optiques (par exemple des lentilles) qui sont plus minces que celle(s) qu'utiliserait un unique système optique. Ainsi, le poids total des optiques du dispositif selon l'invention est inférieur à celui d'un unique système optique. L'utilisation du dispositif selon l'invention pour un projecteur de véhicule terrestre permet d'économiser du carburant.

La focalisation des moyens de projection sur les images virtuelles rend le module optique de projection peu sensible aux défauts de réalisation des systèmes optiques primaires : si les moyens de projection sont focalisés sur la surface des dioptres, c'est cette surface qui est imagée et donc tous ses défauts de réalisation qui sont rendus visibles, ce qui peut générer des défauts d'homogénéité ou de chromatisme dans le faisceau lumineux projeté. De plus, cela permet d'utiliser des matrices de sources de lumière en association avec les systèmes optiques primaires, chaque source et /ou matrice de sources pouvant être individuellement imagée.

Selon différents exemples de l'invention, qui pourront être pris ensemble ou séparément, le dispositif peut en outre comprendre :
- les matrices sont associées en au moins une paire de matrices et les images, formées par le système de projection, des images virtuelles d'une paire de matrices se recouvrent partiellement ;
- les matrices sont associées de sorte qu'un espace résiduel est conservé entre deux matrices mitoyennes successives, cet espace étant supérieur à l'espace entre deux sources primaires adjacentes quelconques disposées sur une même matrice. Notamment, l'espace entre deux matrices mitoyennes successives est supérieur strictement à la longueur du composant électronique formant chacune des sources primaires de ces matrices ;
- les sources primaires de lumière d'une paire de matrices associées sont configurées de sorte que la somme des émittances en un point du recouvrement partiel est sensiblement égale à l'émittance en un point d'une des matrices ne contribuant pas au recouvrement ;
- la configuration des sources primaires de chacune des matrices d'une paire de matrices associées comprend un accroissement de l'émittance des sources primaires contribuant au recouvrement partiel qui est proportionnel à l'éloignement de ces sources primaires d'une première matrice de la paire d'une deuxième matrice de la paire ;
- les matrices associées sont des sources de lumière pixélisées et *p* pixels imagés de chaque image virtuelle contribuent au recouvrement partiel ;
- un pixel *p₁ᵢ* imagé d'une première image virtuelle contribuant au recouvrement partiel est associé à un pixel *p₂ᵢ* imagé d'une deuxième image virtuelle contribuant au recouvrement partiel, les pixels *p₁ᵢ* et *p₂ᵢ* formant une paire de pixels imagés, l'intensité lumineuse produite pour chaque paire de pixels du recouvrement partiel étant sensiblement identique à celle des pixels imagés ne contribuant pas au recouvrement ;
- les pixels imagés *p₁ᵢ* et *p₂ᵢ* d'une paire *i* de pixels se recouvrent sensiblement en leur totalité ;
- un décalage entre les pixels imagés *p₁ᵢ* et *p₂ᵢ* d'une paire de pixels est inférieur à la longueur d'un pixel d'une matrice.
- les systèmes optiques primaires sont agencés de sorte que les images virtuelles d'une paire de matrices associées se recouvrent partiellement sur une surface commune à l'ensemble des images virtuelles formées ;
- la surface commune à l'ensemble des images virtuelles formées est une parmi : une surface plane, une surface courbe ;
- les matrices sont associées en au moins une paire de matrices et le système de projection optique comprend des moyens formant, pour chacune des images virtuelles, une deuxième image virtuelle, les deuxièmes images virtuelles d'une paire de matrices associées se recouvrant partiellement dans l'image formée par le système de projection optique ;
- les moyens du système de projection optique formant une deuxième image virtuelle pour chacune des images virtuelles comprennent un prisme associé à chaque système optique primaire ;
- les sources primaires de lumière sont des diodes électroluminescentes.

L'invention se rapporte encore à un projecteur de véhicule automobile muni d'un tel dispositif optique.

### BREVE DESCRIPTION DES FIGURES

L'invention sera mieux comprise à la lumière de la description suivante qui n'est donnée qu'à titre indicatif et qui n'a pas pour but de la limiter, accompagnée des dessins joints :
- la figure 1 illustrant de façon schématique, une vue en perspective d'un exemple d'un dispositif selon l'invention,
- la figure 2 illustrant de façon schématique, une vue en perspective agrandie d'une partie du dispositif selon la figure 1,
- la figure 3 illustrant de façon schématique, une vue de face d'un premier type de matrice de sources lumineuses,
- la figure 4 illustrant de façon schématique, une vue de côté du premier mode de réalisation d'un dispositif selon l'invention,
- la figure 5 illustrant de façon schématique, une vue de face d'un deuxième type de matrice de sources lumineuses,
- la figure 6 illustrant de façon schématique, une vue de face d'un troisième type de matrice de sources lumineuses,
- la figure 7 illustrant de façon schématique, une vue de face d'un quatrième type de matrice de sources lumineuses,
- la figure 8 illustrant de façon schématique, une vue de haut d'un premier exemple d'un dispositif selon l'invention,
- la figure 9 illustrant de façon schématique, une vue de haut d'un deuxième exemple d'un dispositif selon l'invention,
- la figure 10 illustrant de façon schématique, une vue de haut d'un troisième exemple d'un dispositif selon l'invention,
- les figures 11 à 13 illustrant de façon schématique la modulation de l'intensité lumineuse de pixels contribuant au recouvrement sensiblement superposés,
- les figures 14 à 16 illustrant de façon schématique la modulation de l'intensité lumineuse de pixels contribuant au recouvrement sensiblement décalés,
- la figure 17 illustrant de façon schématique, une vue de face d'un premier exemple d'agencement de matrices de sources lumineuses,
- la figure 18 illustrant de façon schématique, une vue de face d'un deuxième exemple d'agencement de matrices de sources lumineuses,
- la figure 19 illustrant de façon schématique, une vue de face d'un troisième exemple d'agencement de matrices de sources lumineuses,
- les figures 20 à 22 illustrant de façon schématique des exemples de recouvrement.

### DESCRIPTION DETAILLEE

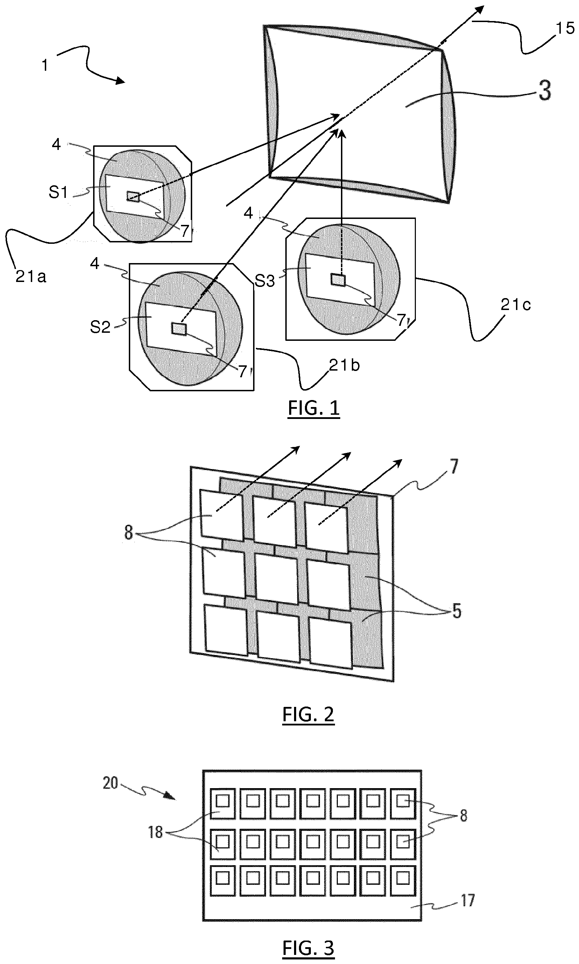

Les figures 1, 8 à 10 montrent un exemple d'un module optique 1 de projection de faisceau lumineux, notamment pour véhicule automobile. Le module 1 comprend d'amont en aval dans le sens de propagation des rayons lumineux selon l'axe optique 15, trois matrices S1, S2, S3 comprenant des sources primaires 8 de lumière aptes à émettre des rayons lumineux, au moins un système optique primaire 4 associé à chaque matrice qui transmet les rayons lumineux émis par les sources primaires de la matrice avec laquelle il est associé, et des moyens de projection optique 3 configurés pour projeter un faisceau lumineux à partir des rayons lumineux incidents transmis par les systèmes optiques primaires 4. Le module optique comprend dans ces exemples trois matrices de sources primaires de lumière, étant entendu que le nombre minimum de matrices est d'au moins deux matrices.

Toujours sur les figures 1, 8 à 10, le sens de propagation des rayons lumineux émis par les matrices de sources primaires est représenté par les flèches qui partent des matrices S1, S2, S3 et se dirigent vers les moyens de projection 3. L'expression système optique primaire 4 disposé en aval de la matrice signifie que le système optique primaire est situé sur le chemin qu'emprunte la lumière émise par les sources primaires.

Les moyens de projection 3 forment encore un système de projection optique et peuvent prendre la forme d'une lentille de projection unique. Les moyens de projection pourraient néanmoins être formés de l'association munis de plusieurs lentilles, de plusieurs réflecteurs, ou encore d'une combinaison d'une ou plusieurs lentilles et/ou d'un ou plusieurs réflecteurs.

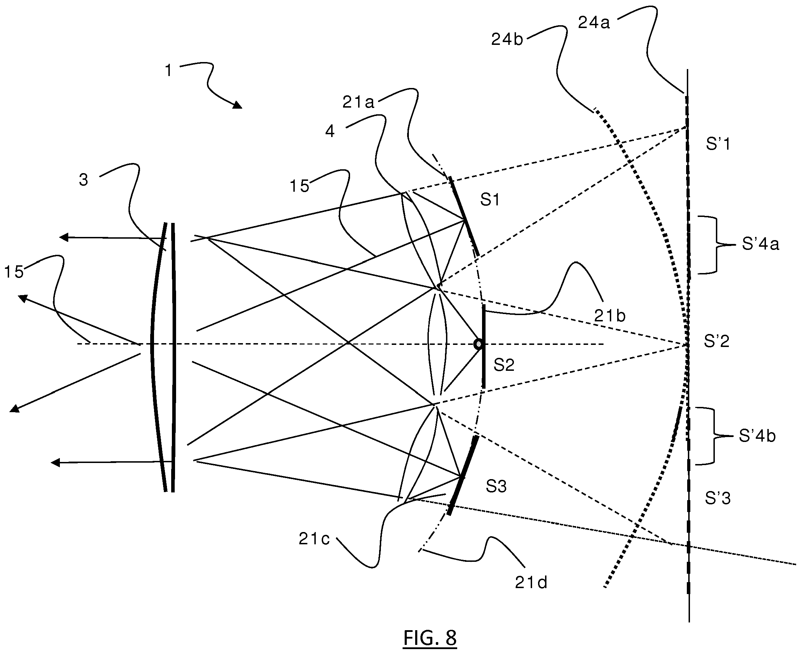

Chaque matrice S1, S2, S3 est disposée sur un plan qui lui est propre : la matrice S1 est placée sur le plan 21a, S2 sur le plan 21b et S3 sur le plan 21c. La manière dont sont disposés les plans les uns par rapport aux autres peut varier. Dans un premier exemple, les plans des matrices sont confondus. Dans un autre exemple, les plans des matrices sont sensiblement parallèles entre eux. Dans un autre exemple, les plans des matrices sont disposés afin de permettre que le centre de chaque matrice puisse être placé sur une ligne courbe ; de préférence, la ligne courbe repose sur un plan qui comprend l'axe optique des moyens de projection, et elle peut être régulière, par exemple un arc de cercle 21d comme illustré sur la figure 8. Ainsi, dans ce dernier exemple, les matrices sont disposées dans l'espace de sorte que leur centre respectif repose sur un arc de cercle avec un rayon qui peut être compris entre l'infini (c'est-à-dire une surface plane) et un f/5, avec f qui est la valeur de la focale du système global formé par la combinaison d'un des systèmes optiques primaires et du système de projection optique. Chaque matrice appartient donc à un plan qui lui est propre. On comprend que l'agencement des plans dans l'espace n'est pas limité aux exemples précédents; l'unique limite est que le système optique primaire associé à chaque matrice puisse former une image virtuelle de la matrice en amont de cette dernière. La création des images virtuelles est discutée plus bas.

Le système optique primaire 4 associé à chaque matrice a pour fonction de transmettre des rayons lumineux des sources primaires de lumière de la matrice de sorte que, combiné aux moyens de projection, le faisceau projeté en dehors du module, par exemple sur la route, soit homogène.

A cette fin, le système optique primaire 4 peut être muni d'une ou plusieurs optiques convergentes. Sur la figure 8, les systèmes optiques primaires 4 sont de simples lentilles convergentes.

Dans un exemple illustré sur la figure 2, lesdites une ou plusieurs optiques convergentes peuvent être des micro-dioptres d'entrée 5 convergents. Ici, les micro-dioptres d'entrée 5 présentent une surface convexe, c'est-à-dire qu'ils sont bombés vers l'extérieur, en direction des sources 8. La surface pourrait toutefois être plane, plan-convexe ou concave-convexe. Un micro-dioptre d'entrée 5 est avantageusement disposé en aval de chaque source de lumière 8, c'est-à-dire de chaque diode électroluminescente ou matrice de diodes de la matrice 2, comme montré sur la figure 2. Les micro-dioptres d'entrée 5 forment des images virtuelles 6 des sources primaires 8 de lumière, comme cela est montré sur la figure 2.

Le terme micro-dioptre désigne des dioptres dont les dimensions externes sont inférieures ou égales à 5 fois les dimensions de la source primaire de lumière ou de la matrice de sources primaires de lumière associée. Elles sont en général dans un ordre de grandeur millimétrique. Ainsi par exemple, pour une diode électroluminescente (LED) individuelle dont la surface émettrice est de 1 mm de côté, les dimensions du dioptre associé seront inscrites dans un carré de 5 mm de côté maximum. Si la source primaire est constituée par une matrice de LED, ce sont les dimensions de la matrice qui seront considérées. De plus, si les sources primaires sont toutes de même dimension, on pourra prévoir que tous les micro-dioptres ont la même dimension. Avantageusement toutefois, on pourra également prévoir que les dioptres associés aux sources en bordure de la matrice, notamment aux extrémités latérales, soient de dimensions plus grandes que les autres afin de former une image virtuelle allongée latéralement et verticalement qui donnera un motif lumineux projeté de plus grande taille que les autres, notamment pour produire un éclairement des bas-côtés de la route.

Le système optique primaire 4 peut comprendre en outre un dioptre de sortie 9 unique pour tous les micro-dioptres d'entrée 5. Le dioptre de sortie 9 apporte une correction optique du faisceau transmis à la lentille de projection 3. La correction sert notamment à améliorer l'efficacité optique du dispositif et à corriger les aberrations optiques du système 4. A cette fin, le dioptre de sortie 9 a une forme de dôme sensiblement sphérique. Cette forme dévie peu la direction des rayons lumineux du faisceau provenant d'une source disposée sur l'axe optique 15, et qui traversent le dioptre de sortie 9. Le dioptre de sortie 9 peut avoir a une forme de dôme sensiblement sphérique, ou bien encore une forme allongée, de type cylindrique, avec une définition bifocale.

Le système optique primaire 4 peut être fait d'une seule matière, c'est-à-dire venu de matière. Autrement dit, les micro-dioptres d'entrée 5 et le dioptre de sortie 9 forment les faces d'entrée et de sortie d'un même élément, le système optique primaire 4, qui s'apparente à une lentille complexe.

Le système optique primaire 4 peut comprendre un micro-dioptre de sortie 9 pour chaque micro-dioptre d'entrée 5. Le système optique primaire 4 forme alors un ensemble de microlentilles bi convexes, chaque microlentille étant disposée devant une source primaire de lumière. La microlentille ne permet cependant pas de corriger le faisceau global transmis, comme un système optique primaire 4 muni d'un dioptre de sortie 9 unique. Cette microlentille a l'avantage d'apporter une meilleure homogénéité des images virtuelles et moins de déformation des images.

Les dioptres de sortie 9 et les micro-dioptres d'entrée 5 font partie d'un système optique primaire 4 venu de matière. Autrement dit, le système optique primaire 4 ne comprend qu'un seul élément.

Ainsi, le système optique primaire 4 muni de micro-dioptres comme optiques convergentes permet d'imager une source lumineuse pixélisée dans laquelle chaque image virtuelle créée est un pixel imagé. Dans la suite, et indépendamment des configurations des systèmes optiques primaires, on considère que chaque matrice S1, S2, S3 forme une seule image virtuelle. On comprend donc que la matrice peut être une source de lumière pixélisée à partir de laquelle une image virtuelle est obtenue, et cette image virtuelle est composée de pixels imagés. Ainsi, l'ensemble des pixels imagés de la matrice forment l'image virtuelle. Les pixels imagés des bords de deux matrices voisines se recouvrent partiellement de sorte que l'image virtuelle d'une matrice ne comprend pas d'espace (de zones sans lumière). Le système optique primaire 4 de chaque matrice permet donc de former une image virtuelle 6 des sources primaires 8 de lumière afin d'obtenir une distribution homogène du faisceau, c'est-à-dire que les composantes du faisceau lumineux sont correctement ajustées les unes par rapport aux autres, sans bandes sombres et/ou brillantes (en surintensité) entre elles qui nuiraient au confort de conduite.

Les images virtuelles 6 sont formées en amont des matrices S1, S2, S3 de sources primaires 8 par les systèmes optiques primaires 4. L'expression « une image virtuelle de la matrice est formée en amont de cette dernière » signifie que les rayons formés en amont de chaque système optique primaire semblent provenir d'une image située à l'arrière de chaque source primaire. Les images virtuelles servent donc de nouvelles sources de lumière pour les moyens de projection.

Les images virtuelles 6 obtenues sont de préférence agrandies, et les images virtuelles d'une paire de matrices (20) associées se recouvrent partiellement. Une paire de matrices associées signifie deux matrices mitoyennes, leur mitoyenneté étant établie par rapport à une zone d'espacement entre les deux matrices. Autrement dit, une paire de matrices associées signifie deux matrices que l'on souhaite voir, ou que l'on considère, comme aboutées. L'aboutage de deux matrices correspond donc à les mettre côte à côte, de préférence les plus proches possible, dans le but par exemple de simuler une matrice qui serait d'un seul tenant. Toutefois, un espace résiduel est conservé entre deux matrices mitoyennes successives, cet espace étant supérieur à l'espace entre deux sources primaires 8 adjacentes quelconques disposées sur une même matrice. Notamment, l'espace entre deux matrices mitoyennes successives est supérieure strictement à la longueur du composant électronique formant chacune des sources primaires 8 de ces matrices.

Ainsi, les images virtuelles mitoyennes de deux matrices mitoyennes se recouvrent partiellement entre elles : le recouvrement partiel se traduit par un chevauchement de leurs projections respectives par les moyens de projection. Plus précisément, une ou plusieurs images des sources primaires de deux matrices aboutées se recouvrent. On peut alors parler de recouvrement de pixels imagés. De fait, on cherchera dans la conception des systèmes optiques primaires, dans l'agencement des systèmes optiques primaires entre eux, ainsi que dans l'agencement des systèmes optiques primaires avec leur matrices respectives, à ce que les images virtuelles soient partiellement recouvertes d'un point de vue paraxial, avec une marge de tolérancement pour assurer la robustesse vis-vis de la précision de positionnement des sources lumineuses et vis-à-vis des défauts de réalisation des systèmes optiques primaires (par exemple les surfaces des micro-dioptres). L'invention permet donc non seulement d'utiliser des composants standards présents sur le marché, mais elle évite en plus les problèmes de dilatation thermique se produisant entre les composants aboutés qui portent les sources de lumière. Le recouvrement assure une robustesse du système vis-à-vis des tolérances de positionnement des images virtuelles, la tolérance de positionnement des images virtuelles dépendant elle-même de la tolérance de position des sources primaires, de la tolérance de position et de fabrication des systèmes optiques primaires.

Les images virtuelles 6 peuvent être plus éloignées de la lentille de projection 3 par rapport aux matrices des sources lumineuses primaires, ce qui permet de garder un module optique compact.

Les systèmes optiques primaires 4 sont avantageusement configurés pour former des images virtuelles 6 sur une surface unique qui est commune pour l'ensemble des images virtuelles formées par les différents systèmes optiques primaires. Ainsi, ladite surface unique sert à créer une image virtuelle formée à partir de l'ensemble des images virtuelles, et cette image virtuelle est continue notamment parce que les images virtuelles de paires de matrices associées se recouvrent partiellement. Autrement dit, les images virtuelles mitoyennes se recouvrent partiellement et créent une unique image virtuelle dans laquelle il n'y a pas de zone non illuminée. Dit autrement, il n'y a pas de zone sombre dans le faisceau lumineux émis par le module selon l'invention.

De préférence, les dimensions des images virtuelles 6 sont plus grandes que les dimensions des sources primaires 8 de lumière. Comme le montre la figure 8, l'agrandissement de la taille des images virtuelles S'1, S'2 et S'3 permet un recouvrement partiel des images virtuelles d'une paire de matrices associées. Par exemple, les matrices S1 et S2 forment une paire de matrices associées car elles sont mitoyennes. Leur système optique primaire respectif (dans cet exemple une simple lentille convergente) crée une image virtuelle, respectivement S'1 et S'2. Les deux images virtuelles S'1 et S'2 sont formées sur une même surface 24a, 24b. Le recouvrement se situe au niveau de l'accolade S'4a. Pareillement, les matrices S2 et S3 forment une paire de matrices associées car elles sont mitoyennes, et leur images virtuelles S'2 et S'3 sont formées également sur le plan 24a avec un recouvrement situé au niveau de l'accolade S'4a. La surface unique peut être un plan 24a. Elle peut également être une surface ayant une courbure, par exemple la surface 24b a une courbure telle que tout point de la surface admet le plan tangent. Une surface courbe permet de corriger des aberrations créées par les moyens de projection qui peuvent être formés par la lentille 3 de projection optique. En tout état de cause, l'image virtuelle formée à partir de l'ensemble des images virtuelles est continue, c'est-à-dire qu'elle ne comprend pas de zone sombre.

Afin d'obtenir le recouvrement entre les images virtuelles mitoyennes, c'est-à-dire entre les images virtuelles d'une paire de matrices associées, la courbure convexe et le matériau composant chaque système optique primaire est adaptés aux dimensions de la matrice S1, S2, S3 de sources primaires 8, ainsi que le positionnement du système optique primaire 4 par rapport à la matrice, de sorte que les images virtuelles mitoyennes se recouvrent partiellement. Afin de minimiser les aberrations, il est possible de placer le système optique primaire presque en contact avec la matrice avec laquelle il est associé. Typiquement, la distance entre le système optique primaire et la matrice associée est inférieure à 1mm, par exemple 0,5mm.

Les figures 3 et 5 à 7 représentent des exemples de matrices que peut comprendre le dispositif selon l'invention. Une matrice comprend au moins deux zones d'émission de lumière différentes, qui sont adressables individuellement ; une matrice comprend donc au moins deux sources primaires (8) de lumière aptes à émettre des rayons lumineux. Les sources primaires forment de préférence une grille de sources primaire, c'est-à-dire que les sources lumineuses sont réparties sur la matrice suivant un motif régulier, par exemple un motif en damier.

La figure 3 montre une matrice 20 multi puces de sources de lumière 8, de type diode électroluminescente, chaque source 8 étant adressable individuellement. Chaque source 8 est fabriquée séparément sur une puce indépendante, qui est montée sur un élément de maintien 18, lui-même assemblé aux autres sources sur un support 17.

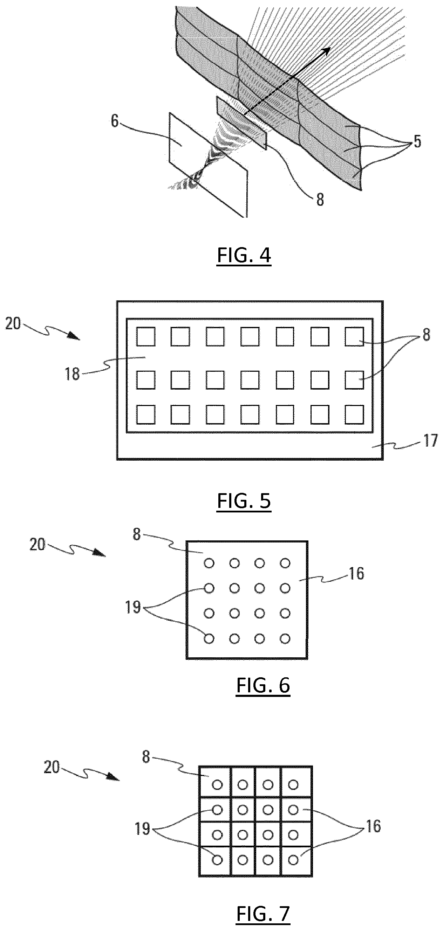

La figure 5 représente un deuxième type de matrice 20 multi puces dans laquelle les diodes électroluminescentes sont préassemblées les unes aux autres sur un élément de maintien 18 commun disposé sur un support 17.

Les figures 6 et 7 illustrent des matrices mono-puce 20, dans lesquelles les sources de lumière 8 ont une électrode en commun. Une diode a deux électrodes 16,19 en contact, une première électrode 19 ponctuelle et une deuxième électrode 16 surfacique. Sur la figure 6, les sources primaires 8 sont adressables individuellement en activant la première électrode 19, la deuxième électrode étant la même pour toute les sources 8 de la puce. En revanche, les sources de lumière 8 de la figure 7 ont une deuxième électrode 19 divisée en portion de manière à avoir une deuxième électrode 19 indépendante pour chaque source 8, les premières électrodes 16 étant activables simultanément.

Les matrices peuvent être basées sur une source lumineuse à semiconducteur comprenant une pluralité d'unités électroluminescentes de dimensions submillimétriques, les unités étant réparties dans différentes zones lumineuses activables sélectivement. En particulier, chacune des unités lumineuses électroluminescentes de dimensions submillimétriques prend la forme d'un bâtonnet.

Les sources primaires 8 de lumière sont par exemple des diodes électroluminescentes formant un réseau sur une matrice, comme représenté par exemple sur la figure 5. Une telle matrice de diodes électroluminescentes sont connues et accessibles dans le commerce.

Les systèmes optiques primaires 4 associent les rayons lumineux des matrices 20 afin de former un faisceau unique ayant les mêmes propriétés que si les matrices du dispositif étaient parfaitement aboutées.

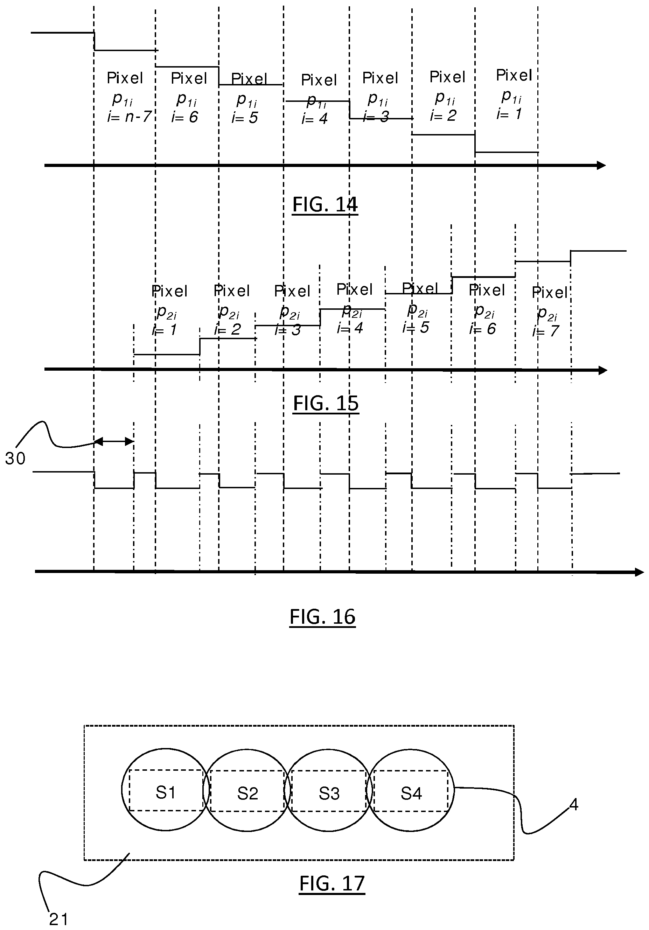

La figure 17 montre un exemple schématique d'une vue de face de quatre matrices (S1 à S4) qui sont aboutées dans un même plan 21, et dans lequel la distance entre deux matrices mitoyennes (S1-S2, S2-S3, S3-S4) est non-nulle, supérieure à 20 micromètres et typiquement de 1mm à 20mm voire plus, du fait de contraintes de construction liée aux matrices. Pour les besoins de la clarté de la figure, l'espace entre les matrices aboutées est exagérément augmenté. Chaque matrice est associée avec un système optique primaire 4 (schématisé par un cercle). On comprendra que l'espace entre les matrices mitoyennes est exagérément agrandi sur la figure dans un souci de lisibilité de la figure.

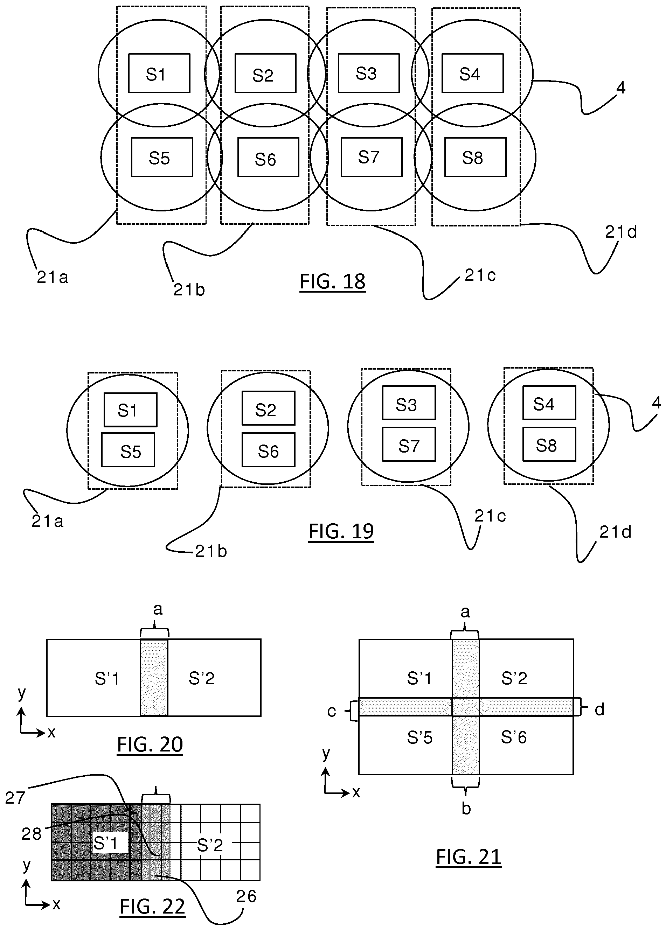

La figure 18 montre un autre exemple schématique de dispositif selon l'invention dans lequel chaque plan 21a à 21d comprend deux matrices. Dans cet exemple, les deux matrices associées (S1-S5, S2-S6, S3-S7, S4-S8) sont situées sur un même plan et ne sont pas aboutée. Chaque matrice est associée avec son système optique primaire 4 (schématisé par un cercle).

La figure 19 montre un autre exemple schématique de dispositif selon l'invention dans lequel chaque plan 21a à 21d comprend deux matrices, les deux matrices situées sur un même plan étant aboutées. Les matrices disposées sur un même plan sont associées à un même système optique primaire qu'elles partagent, ce qui permet d'alléger le dispositif.

Afin que le faisceau en sortie de la lentille de projection optique 3 soit le plus homogène possible (et notamment en ce qui concerne le contraste), le recouvrement entre les images virtuelles mitoyennes peut être géré ou piloté. Gérer le recouvrement signifie contrôler un ou plusieurs paramètres du recouvrement, par exemple ses dimensions, son émittance...

Concernant les dimensions de la zone de recouvrement, elles vont notamment dépendre de la source lumineuse et du système optique primaire qui lui est associé. Les matrices munies des sources primaires de lumière peuvent avoir une forme quelconque. Cependant, les matrices ont en pratique une forme de quadrilatère, de préférence un quadrilatère régulier tel qu'un rectangle ou un carré ; ainsi l'image virtuelle produite aura également une forme quadrilatère. Les images virtuelles formées sur la surface unique sont partiellement recouvertes d'un point de vue paraxial. Plus précisément, le recouvrement est réalisé, pour chaque association de deux matrices, selon au moins une direction, et la largeur du recouvrement est la distance mesurée du recouvrement selon cette même direction. La figure 20 montre un exemple de recouvrement de deux images virtuelles S'1 et S'2 produites par exemple par les sources S1 et S2 des figures 1, 8, 17-19. Les deux images sont de formes rectangulaires car les matrices des sources de lumière S1 et S2 sont rectangulaires; par exemple leurs sources primaires forment une grille. Les deux images virtuelles S'1 et S'2 sont alignées selon une première direction y, et le recouvrement (la zone grisée sur la figure 20) est réalisé selon la direction x pour une largeur a. La figure 21 montre un autre exemple de recouvrement de quatre images virtuelles S'1 et S'2 produites par exemples par les sources S1, S2, S5, S6 de la figure 18. Les quatre images sont de formes rectangulaires car les quatre matrices des sources de lumière le sont aussi. Les deux images virtuelles S'1 et S'2 (S'5 et S'6) sont créées par la paire de matrices S1 et S2 (S5 et S6) et sont alignées selon une première direction y, le recouvrement étant réalisé selon la direction x pour une largeur donnée a (b). On comprendra que les largeurs a et b sont de préférence égales afin de facilité la gestion des recouvrements. S1 et S5 (S2 et S6) forment également une paire de matrices associées, et leurs images virtuelles S'1 et S'5 (S'2 et S'6) sont cette fois ci alignées selon la direction x et se recouvrent selon la direction y pour une largeur de recouvrement c (d). De même, les largeurs c et d sont de préférence égales afin de facilité la gestion des recouvrements. Une matrice peut avoir plus d'une association ; dans cet exemple, S1 est associée à deux matrices S2 et S5.

Les matrices associées sont des sources de lumière pixélisées, ce qui est par exemple le cas avec des matrices de diodes électroluminescentes, ou encore le cas avec une matrice lumineuse associée avec système optique primaire comprenant des micro-dioptres d'entrée 5. Et donc, lorsque les sources de lumières sont des sources pixélisées, les pixels de ces sources sont imagés et l'ensemble des pixels imagés forment l'image virtuelle de la matrice. Dans ce contexte, *p* pixels imagés de chaque image virtuelle contribuent au recouvrement partiel ; *p* est un entier naturel. Chaque pixel parmi les *p* pixels peut contribuer en sa totalité ou bien partiellement au recouvrement. La figure 22 illustre ces deux cas de figure. La figure 22 est semblable à la figure 20, excepté que les pixels imagés sont représentés. Le pixel 26 de l'image virtuelle S'2 contribue en sa totalité au recouvrement, alors que le pixel 27 de l'image virtuelle S'1 contribue partiellement au recouvrement.

Dans l'exemple de la figure 22, les deux images virtuelles S'1 et S'2 ont un nombre égal de pixels imagés, respectivement *p₁ᵢ* pixels pour S'1 et *p₂ᵢ* S'2, qui contribuent au recouvrement, les nombres *p₁ᵢ* et *p₂ᵢ* étant des entiers naturels. Il est possible d'envisager des exemples dans lesquels les nombres *p₁ᵢ* et *p₂ᵢ* ne sont pas égaux, par exemple si la densité de pixels des deux images virtuelles n'est pas égale.

Il y a recouvrement dès lors que les images virtuelles mitoyennes présentent un chevauchement qui implique au moins partiellement un pixel de chaque image virtuelle. En pratique, le recouvrement est réalisé, pour chaque association de deux matrices, selon au moins une direction ; par exemple au moins une colonne de pixels imagés de chaque image virtuelle participe au recouvrement. De manière préférentielle, la largeur du recouvrement implique au moins deux lignes de pixels imagés de chaque image virtuelle afin d'assurer que le recouvrement soit résilient à des facteurs tels que la dilatation thermique pouvant se produisant entre les composants du dispositif, les déréglages de la position d'une matrice et/ou de son système optique primaire. Sur la figure 22, deux colonnes de pixels pour chaque image S'1 et S'2 participent au recouvrement.

Le nombre de pixels imagés de chaque image virtuelle dépend de la configuration de la matrice. Par exemple, pour une résolution des pixels imagés comprise en 0,05° et 0,2°, le nombre de pixels *p* d'une matrice qui se recouvrent avec *p* pixels d'une autre matrice est de préférence supérieur à 10 pixels, c'est-à-dire que 10 colonnes de pixels ou plus de chaque matrice se recouvrent. De manière générale, on peut considérer qu'un recouvrement compris entre 20 et 50 colonnes de pixels de chaque matrice assure une très bonne robustesse du dispositif.

L'émittance du recouvrement doit être sensiblement égale à celle des zones des images virtuelles ne participant pas au recouvrement. Dit autrement, les sources primaires de lumière d'une paire de matrices associées sont configurées de sorte que la somme des émittances en un point du recouvrement partiel est sensiblement égale à l'émittance en un point d'une des matrices ne contribuant pas au recouvrement. Ici, l'expression sensiblement égale signifie que la valeur de l'émittance entre le recouvrement et les autres zones peut varier de ±10%. De préférence, la variation est inférieure ou égale à ±5%.

En pratique, chaque matrice comprend une grille de sources primaires de lumière, comme discuté en référence avec les figures 3, 5-7, et chaque source primaire de lumière est individuellement adressable. Il est donc possible de modifier l'intensité lumineuse individuelle d'un pixel imagé en modifiant l'émittance d'une ou plusieurs sources primaires de lumière de la matrice. Pour des raisons de processus de fabrication, une matrice a une forme de quadrilatère, de préférence un quadrilatère régulier tel qu'un rectangle ou un carré. Il est alors possible de commander l'intensité lumineuse des sources primaires contribuant (ou constituant) à éclairer une ligne de pixels imagés, ladite ligne de pixels contribuant au recouvrement partiel. Afin de faciliter la gestion de la commande de l'intensité lumineuse des pixels imagés contribuant au recouvrement et d'assurer une intensité lumineuse du recouvrement répartie de manière homogène, chaque pixel *p₁ᵢ* imagé d'une première image virtuelle contribuant au recouvrement partiel est associé à un ou plusieurs pixels *p₂ᵢ* imagés d'une deuxième image virtuelle contribuant au recouvrement partiel, de sorte que le recouvrement comprennent une ou plusieurs paires de pixels (*p₁ᵢ*, *p₂ᵢ*), les intensités lumineuses des paires de pixels (*p₁ᵢ*, *p₂ᵢ*) étant sensiblement égales. Les paires sont prioritairement choisies pour que les pixels imagés les composant se recouvrent prioritairement en totalité. On comprendra que l'intensité lumineuse d'une paire de pixels (*p₁ᵢ, p₂ᵢ*) est la somme de l'intensité lumineuse de chaque pixel de ladite paire.

De façon très concrète, cela revient à piloter convenablement l'intensité électrique moyenne qui traverse chaque source primaire et qui détermine la luminance moyenne de chaque pixel. Par exemple, si les sources primaires sont des LED, le rapport cyclique Tₒₙ/T_{off} du courant électrique est piloté afin d'obtenir l'intensité électrique moyenne voulue. Ce pilotage est réalisé comme connu dans l'art.

Les intensités lumineuses des paires de pixels (*p₁ᵢ*, *p₂ᵢ*) sont sensiblement égales. Afin d'améliorer l'homogénéité de l'intensité lumineuse et de produire une répartition d'intensité qui soit constante sur l'ensemble des images virtuelles, les sources primaires de lumière qui contribuent au recouvrement - c'est-à-dire celles qui illuminent les pixels imagés du recouvrement- peuvent être configurées de telle sorte que leur intensité lumineuse est proportionnelle à leurs éloignements de la matrice à laquelle elles n'appartiennent pas. Par exemple sur la figure 22, l'intensité lumineuse du pixel imagé 27 de S'1 est plus importante que celle du pixel imagé 28 de S'1.

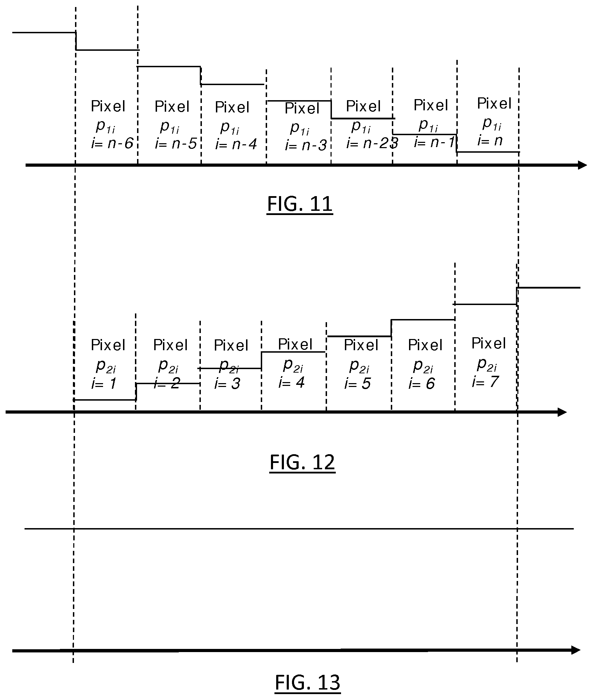

Les figures 11 à 13 illustrent un exemple dans lequel les matrices sont identiques de sorte qu'il est possible d'avoir une paire de pixels imagés - entre un pixel imagé *p₁ᵢ* d'une première image virtuelle contribuant au recouvrement partiel et un pixel imagé *p₂ᵢ* d'une deuxième image virtuelle contribuant au recouvrement partiel- dans laquelle un recouvrement total des deux pixels est possible. La figure 11 représente les intensités des six pixels imagés d'une première image virtuelle, par exemple S'1 sur la figure 22. Ces pixels appartiennent à des colonnes de pixels numérotées *p₁ᵢ* avec i compris entre n-6 et n, n étant le nombre de colonnes de pixels de la matrice S1 produisant l'image virtuelle S'1. Ces pixels *p₁ᵢ* sont situés sur une même ligne de pixels de l'image virtuelle S'1. La figure 12 représente les intensités des six pixels imagés d'une deuxième image virtuelle, par exemple S'2 sur la figure 22. Ces pixels appartiennent à des colonnes de pixels numérotées *p₂ᵢ* avec i compris entre 1 et 7. Ces pixels numérotés *p₂ᵢ* sont situés sur une même ligne de pixels de l'image virtuelle S'2. Les pixels de la première source S1 -la matrice S1 est située à gauche de la source S2 et produit l'image virtuelle S'1- sont pilotés afin d'obtenir une décroissance de l'émittance d'une colonne de pixel à l'autre tandis que les pixels de la deuxième source S2 - la matrice S2 est située à droite de S1 et produit l'image virtuelle S'2- ont une émittance qui augmente d'une colonne de pixel à l'autre. La différence d'émittance entre deux colonnes consécutives peut être dictée par le rapport i/p, avec p qui représente le nombre de colonnes participant au recouvrement pour une image virtuelle et i qui représente l'intensité lumineuse des pixels imagés ne contribuant pas au recouvrement. Sur la figure 11, l'intensité des pixels contribuant au recouvrement est décroissante, et elle est croissante sur la figure 12. En ajustant parfaitement le recouvrement de chaque paire de pixels imagés contribuant au recouvrement, cela conduit à une répartition d'intensité constante sur les deux images virtuelles : l'émittance du recouvrement est égale à celle des autres zones des images virtuelles. La figure 13 illustre répartition d'intensité constante sur les deux images virtuelles. On comprend que des pixels imagés *p₁ᵢ* et *p₂ᵢ* d'une paire de pixels se recouvrent sensiblement sur leur totalité dans l'exemple des figures 11 à 13. On comprend donc que les sources primaires de lumière d'une paire de matrices associées sont configurées de sorte que la somme des émittances en un point du recouvrement partiel est sensiblement égale à l'émittance en un point d'une des matrices ne contribuant pas au recouvrement. Ainsi, la somme de l'intensité lumineuse de chaque couple de pixels imagés se recouvrant (*p₁ᵢ* et *p₂ᵢ* sur les figures 11 et 12) est sensiblement égale à l'intensité d'un quelconque des pixels imagés ne participant pas au recouvrement ; étant entendu que l'on considère que les deux matrices aboutées ont, pour leurs pixels ne participant pas au recouvrement, une émittance semblable, c'est-à-dire très proche ou égale.

Les figures 14 à 16 illustrent un cas de figure quelque peu différent de celui illustré sur les figures 11 à 13 puisque les pixels imagés *p₁ᵢ* et *p₂ᵢ* d'une association de matrices ne se recouvrent que partiellement. Un recouvrement partiel peut résulter d'un défaut d'assemblage du dispositif lors de sa fabrication (par exemple suite à une mauvaise calibration), ou encore après sa fabrication (par exemple suite à un choc). Par exemple, le pixel *p₁ᵢ₌₁₋₆* de l'image S'1 de la première source S1 ne recouvre que partiellement le pixel *p2ᵢ₌₁* de la l'image S'2 de la deuxième source S2 (figure 15) avec lequel il est associé, de même pour le pixel *p₁ᵢ₌ₙ₋₅* avec le pixel *p2ᵢ₌₂*, et ainsi de suite. En conséquence, l'intensité sur la zone de recouvrement n'est pas constance puisqu'il existe un décalage 30 entre les images des pixels imagés de chaque couple *p₁ᵢ p₂ᵢ* d'une paire de pixels.

Dans l'exemple des figures 14 à 16, il existe donc un défaut qui est une différence d'intensité causée par le décalage 30 qui se répète de manière régulière sur l'ensemble du recouvrement. L'amplitude du défaut est inversement proportionnelle aux nombres de pixels qui se recouvrent. Par exemple, sept pixels de chaque matrice sont impliqués dans le recouvrement, et l'amplitude du défaut est i/7.

Avec une source hautement pixélisée (plusieurs centaines de pixels imagés), il est ainsi possible de descendre à une résolution de chaque pixel imagé qui est comprise entre 0,05° et 0,2°. Par exemple, si le champ sur lequel on projette les matrices est de 7° en vertical et de 7° horizontal, alors le nombre de pixels sera de 20000 pixels pour une résolution de 0.05° par pixels et de 1000 pixels pour une résolution de 0.2° par pixel. Cette plage de résolution pour chaque pixel imagé correspond à une fréquence spatiale comprise entre 5 et 20 cycles par degré (cpd), et dans cette plage de valeurs de fréquence spatiale, il existe un contraste de défaut en-dessous duquel le défaut ne sera pas visible. Pour une fréquence spatiale de 5 cpd, la modulation doit de préférence être comprise entre 1/50 et 1/20, bornes incluses. Ainsi, le nombre de pixels de chaque matrice participant an recouvrement doit de préférence être compris entre 20 et 50 pixels, bornes incluses.

Il est possible de rendre le défaut non visible par l'œil humain en ajustant la manière dont les pixels associés se recouvrent. Si le décalage est inférieur à 1 pixel, c'est-à-dire s'il existe au moins un recouvrement partiel entre deux pixels associés (comme illustré sur les figures 14 à 16), le défaut est alors invisible pour l'œil humain si la résolution de chaque pixel imagé et associé est comprise entre 0,05° et 0,2°. Comme expliqué plus haute, le nombre de colonnes de pixels de chaque matrice participent au recouvrement doit de préférence être compris en 20 et 50 colonnes, bornes incluses

Si le décalage est supérieur à 1 pixel - par exemple, le pixel *p₁ᵢ₌ₙ₋₅* qui est associé avec le pixel *p₂ᵢ₌₂* n'est recouvert partiellement que par le pixel *p₂ᵢ₌₁*), le défaut peut alors être visible à l'œil humain. Dans ce cas, une correction peut être apportée en modifiant l'intensité lumineuse des pixels imagés de l'une et/ou de l'autre matrice, ou encore en décalant la croissance ou la décroissant d'intensité lumineuse de certains pixels si la dimension de la matrice concernée est supérieure au nombre de pixels pouvant être allumés; il existe des pixels en réserve sur la matrice pouvant être utilisés. En d'autres termes, il est possible de corriger un décalage supérieur à un pixel à l'aide des moyens de gestion des pixels - c'est à dire en changeant simplement les pixels allumés -. Par exemple, si le pixel *p₁ᵢ₌ₙ₋₅* est partiellement recouvert par le pixel *p₂ᵢ₌₁* uniquement, il est possible de corriger le défaut en diminuant la largeur du recouvrement, par exemple en relevant l'intensité des pixels *p₁ᵢ* avec i=n-6 à i=n de i/7 et l'intensité du pixel 7 de la deuxième matrice de i/7. Un autre exemple de correction pourrait être, si la matrice S2 comporte des sources primaires pouvant servir à créer une colonne de pixels supplémentaire située sur la gauche de la colonne comprenant le pixel 1, de décaler l'intensité lumineuse des pixels imagés vers la gauche, c'est-à-dire que le pixel à la gauche du pixel *p₂ᵢ₌₁* aurait l'intensité lumineuse du pixel *p₂ᵢ₌₁*, le pixel *p₂ᵢ₌₁* aurait l'intensité lumineuse du pixel *p₂ᵢ₌₂*, et ainsi de suite.

Ainsi, un décalage peut être soit ignoré car n'ayant pas d'influence qui soit perceptible par l'œil humain, ou bien corrigé par une opération de correction dans laquelle on reconfigure l'intensité lumineuse des pixels qui participent au recouvrement des images virtuelles. Cette opération de correction est facile à mettre en œuvre car elle repose essentiellement sur le pilotage des sources primaires des matrices, et ne nécessite pas de modifier le positionnement des éléments constitutifs du dispositif selon l'invention. Ainsi, le dispositif selon l'invention permet de corriger des défauts d'assemblage du dispositif par reprogrammation des pixels, c'est-à-dire sans devoir intervenir physiquement sur les éléments compris dans le dispositif.

En complément de l'exemple du dispositif selon l'invention présenté en référence à la figure 8, il est discuté deux autres exemples d'agencement des systèmes optiques primaires (4) et du système de projection (3).

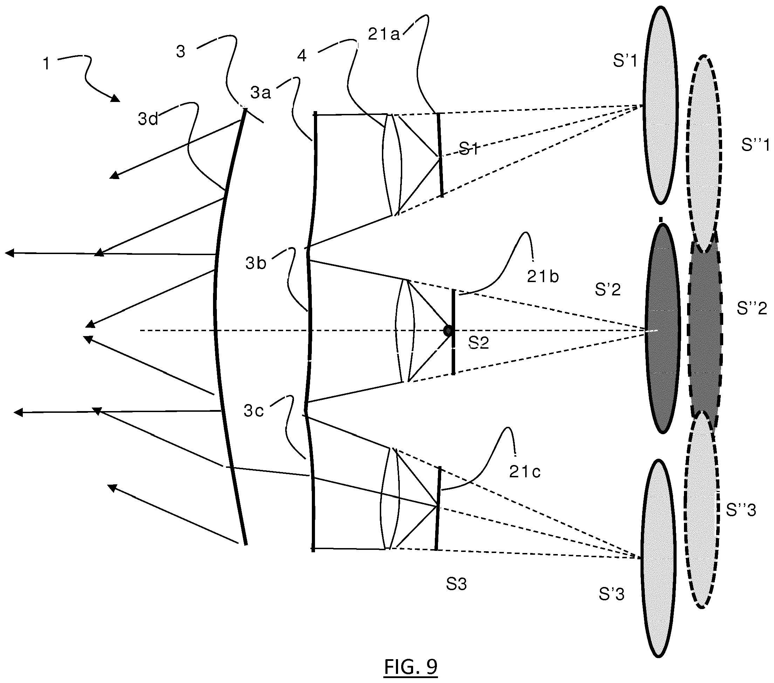

La figure 9 présente un exemple de dispositif semblable à celui discuté en référence à la figure 8. Il comprend trois matrices S1, S2, S3 munies chacune de sources primaires (8) de lumière qui sont aptes à émettre des rayons lumineux. Chaque matrice est disposée sur un plan 21a, 21b, 21c qui lui est propre. Les plans 21a, 21b, 21c peuvent être confondus, ou pas ; dans cet exemple, ils ne le sont pas. Tout comme dans la Figure 8, chaque matrice est associée à un système optique primaire 4 qui disposé en aval de la matrice. Chaque système optique primaire forme une première image virtuelle S'1, S'2, S'3 de la source avec laquelle il est associé, et chacune des images virtuelles est formée en amont de la matrice correspondant à l'image virtuelle. A la différence de l'exemple de la figure 8, les images virtuelles S'1, S'2, S'3 ne se recouvrent pas partiellement. Dans l'exemple de la figure 8, le système de projection optique peut être une lentille classique - par exemple une lentille de révolution puisque les images virtuelles qui sont imagées présentent déjà le recouvrement de sorte que le faisceau projeté présentera également le recouvrement. Au contraire, puisque l'agencement des systèmes optiques primaires sur la figure 9 n'assure pas le recouvrement, c'est au système de projection optique (3) qu'il incombe d'assurer le recouvrement des images des sources à l'infini. Le système de projection optique comprend des moyens formant, pour chacune des images virtuelles formée par un système optique primaire 4, une deuxième image virtuelle. Ainsi, comme représenté sur la figure 9, une deuxième image virtuelle S"1 de la première image virtuelle S'1 de la matrice S1 est créée, et de même pour chacune des matrices S2 et S3. Les deuxièmes images virtuelles S"1, S"2, S"3 sont formées de sorte qu'elles se recouvrent partiellement dans l'image formée par le système de projection optique. Le système optique de projection de la figure 9 comprend des moyens 3a, 3b, 3c qui sont chacun associés à un des systèmes optiques primaires et qui créent les deuxièmes images virtuelles S"1, S"2, S"3. Ces moyens 3a, 3b, 3c, qui sont en entrée du système optique de projection 3, peuvent comprendre un prisme qui est associé à chaque matrice. Chaque prisme contribue à remettre en phase les dites premières images virtuelles créées par les systèmes optiques primaires. Le système optique de projection de la figure 9 comprend en outre une lentille 3d qui forme l'image des dites deuxièmes images virtuelles. La lentille 3d peut être une lentille similaire à celle de l'exemple de la Figure 8. Les moyens 3a, 3b, 3c et la lentille 3d peuvent former une seule et unique lentille, comme schématisé sur la figure 9. Alternativement, les moyens 3a, 3b, 3c et la lentille 3d sont distincts et sont alors agencés de manière à ce que la lentille de sortie 3d du système de projection puisse imager à l'infini les dites deuxièmes images virtuelles. Dans un autre exemple, les moyens 3a, 3b, 3c constituent une lentille et 3d constitue une lentille. Ou encore, les moyens 3a, 3b, 3c constituent un dioptre, et 3d également. Dans cet exemple, le recouvrement est créé en entrée du dispositif optique de projection.

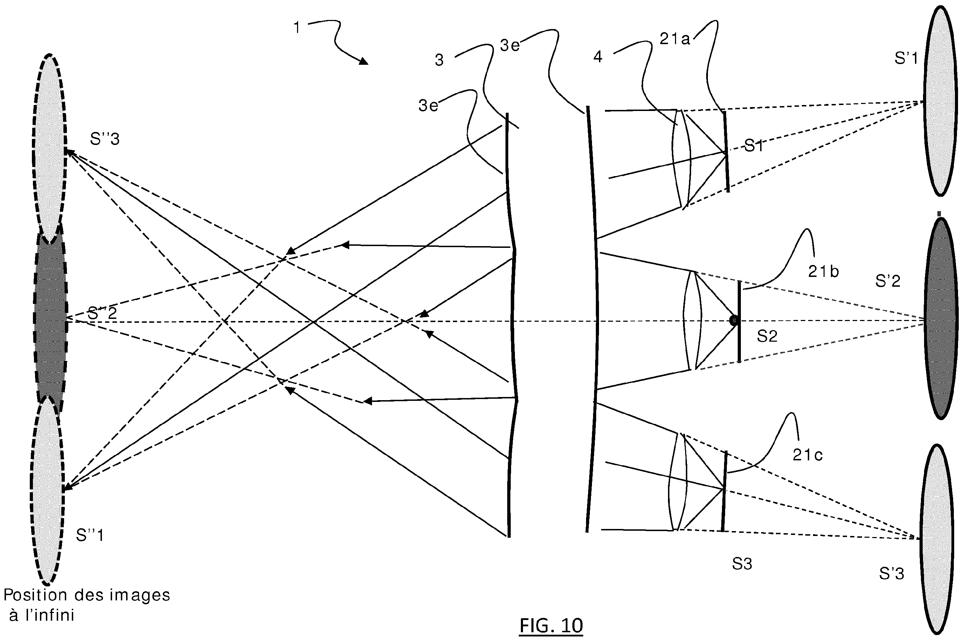

La figure 10 présente un exemple de dispositif semblable à celui discuté en référence à la figure 9 en ce que les images virtuelles S'1, S'2, S'3 ne se recouvrent pas partiellement. Dans l'exemple de la figure 10, le système de projection optique comprend deux lentilles 3e, 3f, qui peuvent être venues de matière. Les deux lentilles 3e et 3f du système de projection sont agencées de sorte qu'elles créent des images S"1, S"2, S"3, correspondant aux images virtuelles S'1, S'2, S'3, qui se recouvrent partiellement. Le recouvrement est donc créé en sortie du système optique de projection.

## Revendications

1. Dispositif optique de projection de faisceau lumineux pixélisé, notamment pour véhicule automobile, comprenant :
- au moins deux matrices (S1, S2, S3) munies chacune de sources primaires (8) de lumière aptes à émettre des rayons lumineux et disposées chacune sur un plan (21a, 21b, 21c) qui lui est propre ;
- au moins un système optique primaire (4) associé à chaque matrice et disposé en aval de la matrice, chaque système optique primaire formant une image virtuelle (6) de la matrice en amont de cette dernière ;
- un système de projection optique (3) apte à former une image de chaque image virtuelle, les images des images virtuelles ainsi formées se recouvrant partiellement ;
la distance entre deux matrices mitoyennes (S1-S2, S2-S3, S3-S4) étant non-nulle

2. Dispositif selon la revendication 1, dans lequel les matrices sont associées en au moins une paire de matrices et dans lequel les images des images virtuelles (6) d'une paire de matrices (20) formées par le système de projection se recouvrent partiellement.

3. Dispositif selon la revendication 2, dans lequel les sources primaires de lumière d'une paire de matrices associées sont configurées de sorte que la somme des émittances en un point du recouvrement partiel est sensiblement égale à l'émittance en un point d'une des matrices ne contribuant pas au recouvrement.

4. Dispositif selon la revendication 3, dans lequel la configuration des sources primaires de chacune des matrices d'une paire de matrices associées comprend un accroissement de l'émittance des sources primaires contribuant au recouvrement partiel qui est proportionnel à l'éloignement de ces sources primaires d'une première matrice de la paire d'une deuxième matrice de la paire.

5. Dispositif selon l'une quelconque des revendications 2 à 4, dans lequel les matrices (20) associées sont des sources de lumière pixélisées et *p* pixels imagés de chaque image virtuelle contribuent au recouvrement partiel.

6. Dispositif selon la revendication 5, dans lequel un pixel *p₁ᵢ* imagé d'une première image virtuelle contribuant au recouvrement partiel est associé à un pixel *p₂ᵢ* imagé d'une deuxième image virtuelle contribuant au recouvrement partiel, les pixels *p₁ᵢ* et *p₂ᵢ* formant une paire de pixels imagés, l'intensité lumineuse produite pour chaque paire de pixels imagés du recouvrement partiel étant sensiblement identique à celle des pixels imagés ne contribuant pas au recouvrement.

7. Dispositif selon la revendication 6, dans lequel les pixels imagés *p₁ᵢ* et *p₂ᵢ* d'une paire *i* de pixels se recouvrent sensiblement en leur totalité.

8. Dispositif selon la revendication 7, dans lequel un décalage entre les pixels imagés *p₁ᵢ* et *p₂ᵢ* d'une paire de pixels est inférieur à la longueur d'un pixel d'une matrice.

9. Dispositif selon l'une quelconque des revendications 2 à 8, dans lequel les systèmes optiques primaires (4) sont agencés de sorte que les images virtuelles (6) d'une paire de matrices (20) associées se recouvrent partiellement sur une surface (24a, 24b) commune à l'ensemble des images virtuelles formées.

10. Dispositif selon la revendication 9, dans lequel la surface (24a, 24b) commune à l'ensemble des images virtuelles formées est une parmi :
- une surface plane (24a) ;
- une surface courbe (24b).

11. Dispositif selon l'une quelconque des revendications 1 à 8, dans lequel les matrices sont associées en au moins une paire de matrices et dans lequel le système de projection optique (3) comprend des moyens formant, pour chacune des images virtuelles, une deuxième image virtuelle, les deuxièmes images virtuelles (6) d'une paire de matrices (20) associées se recouvrant partiellement dans l'image formée par le système de projection optique.

12. Dispositif selon la revendication 11, dans lequel les moyens du système de projection optique (3) formant une deuxième image virtuelle pour chacune des images virtuelles comprennent un prisme (3a, 3b, 3c) associé à chaque système optique primaire.

13. Dispositif selon l'une quelconque des revendications précédentes, dans lequel les sources primaires (8) de lumière sont des diodes électroluminescentes.

14. Projecteur de véhicule automobile comprenant un dispositif optique de projection de faisceau lumineux selon l'une quelconque des revendications précédentes.

## Patentansprüche

1. Optische Vorrichtung zur Projektion eines pixeligen Lichtbündels, insbesondere für ein Kraftfahrzeug, mit :
- mindestens zwei Matrizen (S1, S2, S3), die jeweils mit primären Lichtquellen (8) versehen sind, die in der Lage sind, Lichtstrahlen auszusenden, und die jeweils auf einer eigenen Ebene (21a, 21b, 21c) angeordnet sind;
- mindestens ein primäres optisches System (4), das jeder Matrix zugeordnet und stromabwärts der Matrix angeordnet ist, wobei jedes primäre optische System ein virtuelles Bild (6) der Matrix stromaufwärts der letzteren bildet;
- ein optisches Projektionssystem (3), das in der Lage ist, von jedem virtuellen Bild ein Bild zu erzeugen, wobei sich die so erzeugten Bilder der virtuellen Bilder teilweise überlappen;
der Abstand zwischen zwei angrenzenden Matrizen (S1-S2, S2-S3, S3-S4) ungleich Null ist

2. Vorrichtung nach Anspruch 1, bei der die Matrizen in mindestens einem Matrixpaar zugeordnet sind und bei der sich die Bilder der virtuellen Bilder (6) eines durch das Projektionssystem gebildeten Matrixpaares (20) teilweise überlappen.

3. Vorrichtung nach Anspruch 2, bei der die primären Lichtquellen eines Paares zugehöriger Matrizen so konfiguriert sind, dass die Summe der Emittanzen an einem Punkt der partiellen Überlappung im Wesentlichen gleich der Emittanz an einem Punkt einer der Matrizen ist, die nicht zur Überlappung beiträgt.

4. Vorrichtung nach Anspruch 3, wobei die Konfiguration der Primärquellen jeder eines Paares zugehöriger Matrizen eine Erhöhung der Emittanz der Primärquellen umfasst, die zu einer teilweisen Überlappung beiträgt, die proportional zum Abstand dieser Primärquellen von einer ersten Matrix des Paares von einer zweiten Matrix des Paares ist.

5. Vorrichtung nach einem der Ansprüche 2 bis 4, wobei die zugehörigen Matrizen (20) pixelige Lichtquellen sind und *p* Bildpunkte jedes virtuellen Bildes zur teilweisen Überlappung beitragen.

6. Vorrichtung nach Anspruch 5, bei der ein Pixel *p1i*, das von einem ersten virtuellen Bild, das zur teilweisen Überlappung beiträgt, abgebildet wird, einem Pixel *p2i* zugeordnet wird, das von einem zweiten virtuellen Bild, das zur teilweisen Überlappung beiträgt, abgebildet wird, wobei die Pixel *p1i* und *p2i ein* Paar von abgebildeten Pixeln bilden, wobei die für jedes Paar von abgebildeten Pixeln der teilweisen Überlappung erzeugte Lichtintensität im Wesentlichen identisch mit der der nicht überlappenden abgebildeten Pixel ist.

7. Vorrichtung nach Anspruch 6, wobei die Bildpixel *p1i* und *p2i* eines Pixelpaares *i* sich im Wesentlichen überlappen.

8. Vorrichtung nach Anspruch 7, wobei eine Verschiebung zwischen den Bildpixeln *p1i* und *p2i* eines Pixelpaares kleiner als die Länge eines Pixels einer Matrix ist.

9. Vorrichtung nach einem der Ansprüche 2 bis 8, bei der die primären optischen Systeme (4) so angeordnet sind, dass die virtuellen Bilder (6) eines Paares zugeordneter Matrizen (20) sich teilweise auf einer Fläche (24a, 24b) überlappen, die allen gebildeten virtuellen Bildern gemeinsam ist.

10. Vorrichtung nach Anspruch 9, wobei die allen virtuellen Bildern gemeinsame Oberfläche (24a, 24b) eine der folgenden ist: :
- eine flache Oberfläche (24a) ;
- eine gekrümmte Oberfläche (24b).

11. Vorrichtung nach einem der Ansprüche 1 bis 8, bei der die Matrizen in mindestens einem Matrixpaar zugeordnet sind und bei der das optische Projektionssystem (3) Mittel aufweist, die für jedes der virtuellen Bilder ein zweites virtuelles Bild bilden, wobei die zweiten virtuellen Bilder (6) eines zugeordneten Matrixpaares (20) sich in dem von dem optischen Projektionssystem gebildeten Bild teilweise überlappen.

12. Vorrichtung nach Anspruch 11, wobei das optische Projektionssystemmittel (3), das ein zweites virtuelles Bild für jedes der virtuellen Bilder bildet, ein Prisma (3a, 3b, 3c) umfasst, das jedem primären optischen System zugeordnet ist.

13. Vorrichtung nach einem der vorstehenden Ansprüche, wobei die primären Lichtquellen (8) Leuchtdioden sind.

14. Kraftfahrzeugscheinwerfer mit einer optischen Vorrichtung zur Projektion eines Lichtbündels nach einem der vorstehenden Ansprüche

## Claims

1. Optical device for projecting a pixellated light beam, especially for a motor vehicle, comprising :
- at least two matrices (S1, S2, S3) each provided with primary light sources (8) capable of emitting light rays and each arranged on a plane (21a, 21b, 21c) of its own;
- at least one primary optical system (4) associated with each matrix and arranged downstream of the matrix, each primary optical system forming a virtual image (6) of the matrix upstream of the latter;
- an optical projection system (3) capable of forming an image of each virtual image, the images of the virtual images thus formed partially overlapping ;
the distance between two adjoining matrices (S1-S2, S2-S3, S3-S4) being non-zero

2. Device according to claim 1, wherein the matrices are associated in at least one matrix pair and wherein the images of the virtual images (6) of a matrix pair (20) formed by the projection system partially overlap.

3. Device according to claim 2, wherein the primary light sources of a pair of associated matrices are configured such that the sum of the emittances at a point of the partial overlap is substantially equal to the emittance at a point of one of the matrices not contributing to the overlap.

4. Device according to claim 3, wherein the configuration of the primary sources of each of a pair of associated matrices comprises an increase in the emittance of the primary sources contributing to partial overlap which is proportional to the distance of those primary sources from a first matrix of the pair from a second matrix of the pair.

5. Device according to any one of claims 2 to 4, wherein the associated matrices (20) are pixellated light sources and *p* image pixels of each virtual image contribute to the partial overlap.

6. Device according to claim 5, wherein a pixel *p1i* imaged from a first virtual image contributing to partial overlap is associated with a pixel *p2i imaged from a* second virtual image contributing to partial overlap, the pixels *p1i* and *p2i* forming a pair of imaged pixels, the light intensity produced for each pair of imaged pixels of the partial overlap being substantially identical to that of the non-overlapping imaged pixels.

7. Device according to claim 6, wherein the image pixels *p1i* and *p2i of* a pair *i* of pixels substantially overlap each other.

8. Device according to claim 7, wherein a shift between image pixels *p1i* and *p2i of* a pair of pixels is smaller than the length of a pixel of a matrix.

9. Device according to any one of claims 2 to 8, wherein the primary optical systems (4) are arranged such that the virtual images (6) of a pair of associated matrices (20) partially overlap on a surface (24a, 24b) common to all the virtual images formed.

10. Device according to claim 9, wherein the surface (24a, 24b) common to all the virtual images formed is one of :
- a flat surface (24a) ;
- a curved surface (24b).

11. Device according to any one of claims 1 to 8, wherein the matrices are associated in at least one matrix pair and wherein the optical projection system (3) comprises means forming, for each of the virtual images, a second virtual image, the second virtual images (6) of an associated matrix pair (20) partially overlapping in the image formed by the optical projection system.

12. Device according to claim 11, wherein the optical projection system means (3) forming a second virtual image for each of the virtual images comprises a prism (3a, 3b, 3c) associated with each primary optical system.

13. Device according to any of the preceding claims, wherein the primary light sources (8) are light-emitting diodes.

14. Motor vehicle headlamp comprising an optical device for projecting a light beam according to any one of the preceding claims
